Europäisches Patentamt

European Patent Office

Office européen des brevets

(11) Veröffentlichungsnummer : **0 131 800**
**B1**

(12) **EUROPÄISCHE PATENTSCHRIFT**

(45) Veröffentlichungstag der Patentschrift :
**21.01.87**

(21) Anmeldenummer : **84107370.3**

(22) Anmeldetag : **27.06.84**

(51) Int. Cl.⁴ : **B 23 K 37/00// B22D31/00**

(54) **Anlage zur Behandlung von Werkstücken mit einem explosiven Gasgemisch, insbesondere thermische Entgratanlage.**

(30) Priorität : **16.07.83 DE 3325784**

(43) Veröffentlichungstag der Anmeldung :
**23.01.85 Patentblatt 85/04**

(45) Bekanntmachung des Hinweises auf die Patenterteilung : **21.01.87 Patentblatt 87/04**

(84) Benannte Vertragsstaaten :
**AT CH DE FR GB IT LI**

(56) Entgegenhaltungen :
**DE-B- 2 122 221**
**DE-C- 288 256**

(73) Patentinhaber : **ROBERT BOSCH GMBH**
**Postfach 50**
**D-7000 Stuttgart 1 (DE)**

(72) Erfinder : **Conrad, Hans-Jürgen**
**Lessingstrasse 25**
**D-7255 Rutesheim (DE)**
Erfinder : **Pfeiffer, Eberhard**
**Holunderweg 21**
**D-7410 Reutlingen 3 (DE)**

Jouve, 18, rue St-Denis, 75001 Paris, France

## Beschreibung

### Stand der Technik

Die Erfindung geht aus von einer Anlage nach der Gattung des Hauptanspruchs. Bei den besonders in Bezug genommenen Anlagen zum thermischen Entgraten von Werkstücken werden die zu entgratenden Werkstücke in eine Bearbeitungskammer eingebracht. In diese Kammer wird Brenngas und Sauerstoff über Dosierventile eingeleitet. Das Gasgemisch wird in der Bearbeitungskammer durch eine elektrische Zündeinrichtung gezündet. Bei Wasserstoff als Brenngas verbrennt das Gemisch zu Wasser unter Freisetzung von Wärme. Der Vorgang läuft innerhalb weniger Millisekunden ab. Durch die freiwerdende Wärme treten in der Kammer Temperaturen von ca. 3 500 °C auf. Die in der Bearbeitungskammer auftretenden Drücke des Brenngas-Sauerstoff-Gemisches liegen bei 40 bar bei Füllung der Kammer. Kurz nach dem Zünden tritt aufgrund der Explosion in der Kammer ein Druck in der Größenordnung von ca. 700 bar auf.

Der thermische Entgratvorgang bewirkt beim zu entgratenden Werkstück einen gezielten Werkstoffabtrag, insbesondere an den Kanten. Nachteilig dabei ist jedoch ein ungewollter, örtlich sehr unterschiedlich starker Abtrag an den die Innenwandung bildenden Flächen bzw. Teilen der Bearbeitungskammer und des Gaszuführkanals. Der Abtrag kann bis zu 1 Millimeter pro 50 000 Entgratzyklen betragen. Da die Entgratanlage mit relativ kurzen Taktzeiten arbeitet (z. B. 20 Sekunden), sind die Wände außerdem hohen thermischen Wechselbelastungen ausgesetzt, was zu Rißbildung durch Thermoschock und somit zu einer starken Reduzierung der Zeitstandfestigkeit führen kann.

Um die beim thermischen Entgratverfahren anfallenden Werkzeugkosten zu senken, wird in dem DT-GM-79 27 450 vorgeschlagen, diejenigen Teile der Bearbeitungskammer, die beim Entgratvorgang einem besonders hohen Verschleiß ausgesetzt sind, als leicht austauschbare Einsätze zu konzipieren. Diese Einsätze bestehen bei der bekannten Anordnung aus einem Innenring und einem an diesen angepaßten Kopfteil, der durch einen Adapter gehalten wird. Der Zuführkanal für das Gasgemisch ist hierbei im Kopfteil und im Adapter ausgebildet. Dies bedeutet, daß bei einem im Bereich des Zuführkanals auftretenden Schaden, beispielsweise bei Auftreten eines Durchbrenners im Kanalbereich, der Kopfteil und/oder der Adapter ausgetauscht werden müssen, was aufgrund der Größe dieser Teile mit erheblichem Materialaufwand verbunden ist.

Man ist daher dazu übergegangen, den Zuführkanal nicht mehr im Kopfteil selbst, sondern in relativ kleinen, austauschbaren Einsätzen anzubringen, die in Ausnehmungen des Kopfteils gehalten sind. Diese Einsätze haben zylindrische Form und werden in zylindrische Bohrungen des Kopfteils eingesetzt. Die Abdichtung des zwischen Einsatz und Ausnehmung vorhandenen Spalts gegenüber der Arbeitskammer erfolgt mittels einer mit der Kammerwand verschweißten Dichtscheibe.

### Vorteile der Erfindung

Die erfindungsgemäße Vorrichtung mit den kennzeichnenden Merkmalen des Hauptanspruchs hat demgegenüber den Vorteil, daß die Mantelflächen von Einsatz und Paßsitz selbst für eine optimale Abdichtung gegenüber der Bearbeitungskammer sorgen. Zusätzliche Dichtelemente, z. B. an der Kammerwand befestigte Dichtscheiben, die den Spalt zwischen Einsatz und Ausnehmung dichtend abdecken, werden somit entbehrlich. Dadurch kann der Einsatz im Bedarfsfall sehr rasch ausgewechselt und die Zahl der Dichtelemente reduziert werden. Es ist somit die Möglichkeit gegeben, die erfindungsgemäßen Einsatzteile, die verhältnismäßig kleine, einfach herstellbare Bauelemente darstellen, auszutauschen, ohne daß dadurch der Aufbau der Anlage wesentlich beeinflußt wird.

Durch die in den Unteransprüchen aufgeführten Maßnahmen sind vorteilhafte Weiterbildungen und Verbesserungen der im Hauptanspruch angegebenen Anlage möglich. Eine besonders gute Dichtwirkung bei einfacher Herstellungsweise der Teile läßt sich dadurch erzielen, daß der konische Einsatz als Kegelstumpf, vorzugsweise Steilkegelstumpf, ausgebildet ist. Weiterhin ist es zur Erzielung einer optimalen Dichtwirkung über lange Zeitspannen hinweg von Vorteil, den konischen Einsatz nachstellbar in seinem Paßsitz anzuordnen. Zum Nachstellen kann hierbei ein eine Bohrung im Kopfteil der Arbeitskammer durchgreifender Gewindebolzen dienen, der in ein Innengewinde eingreift, das in dem der Arbeitskammer abgewandten Ende des konischen Einsatzes ausgebildet ist.

### Zeichnung

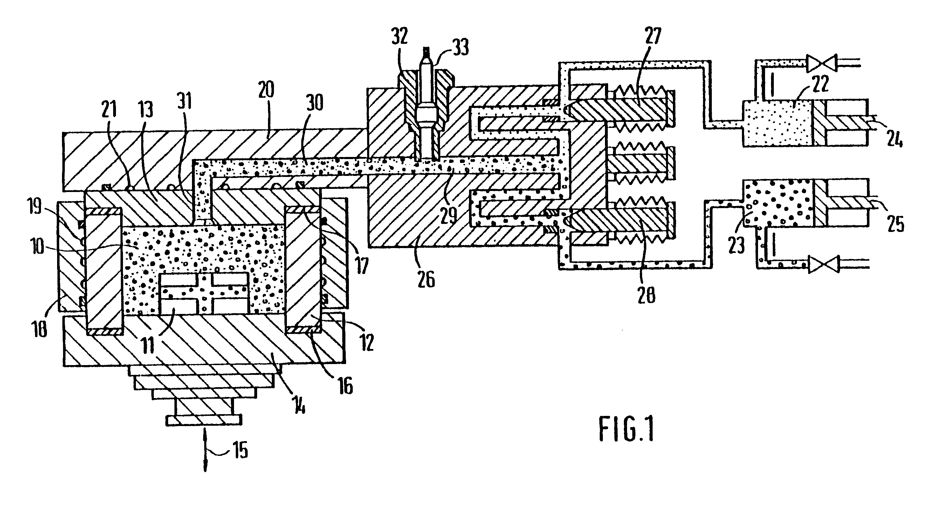

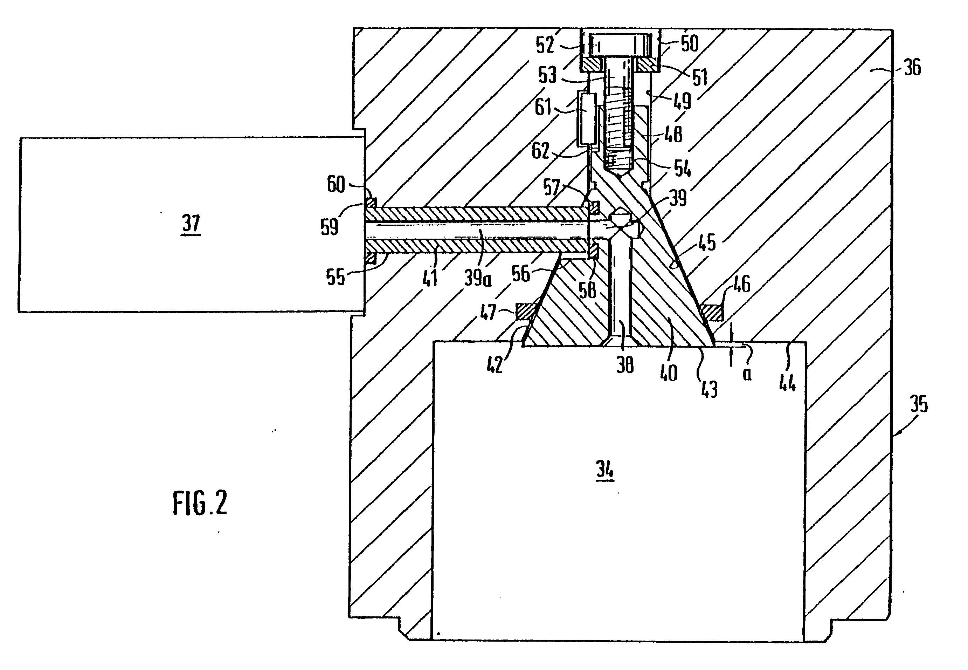

Ein Ausführungsbeispiel der Erfindung ist in der Zeichnung dargestellt und in der nachfolgenden Beschreibung mit Angabe weiterer Vorteile näher erläutert. Es zeigen Figur 1 den schematischen Aufbau einer bekannten Anlage zum thermischen Entgraten von Werkstücken, Figur 2 die wesentlichen Teile einer erfindungsgemäß ausgebildeten Entgratanlage in einem Längsschnitt.

### Beschreibung der Erfindung

In Figur 1 ist mit 10 eine Bearbeitungskammer bezeichnet, in der sich das zu entgratende Werkstück 11 befindet. Die Bearbeitungskammer 10 wird durch einen Innenring 12, einen Kopfteil 13 sowie einen Schließteller 14 begrenzt, welche die Kammerwände bilden. Das Werkstück 11 ruht hierbei auf dem in Richtung des Doppelpfeils 15 bewegbaren Schließteller 14, welcher vor Auslösung des Entgratvorgangs an die Stirnfläche des Innenrings 12 angelegt wird. Zwischen Teller 14 und Stirnfläche ist ein Dichtring 16 angeordnet. Ein weiterer Dichtring 17 befindet sich zwischen der anderen Stirnfläche des Innenrings 12 und dem Kopfteil 13.

Der Innenring 12 ist von einem Kühlring 18 mit Kühlschlangen 19 umgeben. Dem Kopfteil 13 ist ein Adapter 20 angepaßt. Dieser ist ähnlich wie der Kühlring 18 ausgebildet und mit Kühlschlangen 21 versehen, die die Kühlung des Kopfteiles 13 übernehmen. Die Teile 18, 20 werden durch nicht gezeigte Verbindungsmittel, beispielsweise Zuganker, zusammengehalten.

Die Gaskomponenten des Brenngas-Sauerstoff-Gemisches werden durch einen Dosierzylinder 22 für Brenngas sowie einen Dosierzylinder 23 für Sauerstoff mittels Gaseinstoßkolben 24 bzw. 25 in eine an den Adapter 20 angeflanschte Mischkammer 26 eingebracht. Ventile 27, 28 für Brenngas bzw. Sauerstoff steuern den Einlaß der Gaskomponenten in die Mischkammer 26. Die Vermischung der Gaskomponenten erfolgt in einer Bohrung 29 der Mischkammer 26. An diese Bohrung schließt sich eine im Adapter 20 ausgebildete Bohrung 30 an, die ihre Fortsetzung in einer Vertikalbohrung 31 des Kopfteils 13 hat. Letztere mündet in die Bearbeitungskammer 10 und bildet zusammen mit den Bohrungen 29, 30 den Gaszuführkanal der Anlage. Zur Zündung des Gasgemisches dient eine in einer Halterung 32 der Mischkammer 26 sitzende Zündkerze 33.

Abweichend von der vorstehend beschriebenen bekannten Anlage ist bei der vorgeschlagenen Anlage der Gaszuführkanal nicht in einem austauschbaren Kopfteil und einem diesen abstützenden Adapter, sondern in austauschbaren Einsätzen ausgebildet, die in Ausnehmungen des Kopfteils gehalten werden und ein wesentlich kleineres Volumen haben als die Teile 13, 20 der bekannten Anlage. Die Bearbeitungskammer 34 ist dabei in einem vorzugsweise zylindrischen Block 35 ausgebildet, dessen Kopfteil mit 36 bezeichnet ist. Der von einer Mischkammer 37 ausgehende Gaszuführkanal besteht aus rechtwinkelig zueinander angeordneten Sacklochbohrungen 38, 39, 39a von denen die vertikal verlaufende, in die Bearbeitungskammer 34 mündende Bohrung 38 sowie die Bohrung 39 in einem Einsatz 40, die Bohrung 39a in einem Einsatz 41 ausgebildet ist. Der mit der Vertikalbohrung 38 versehene Einsatz 40 hat hierbei eine konische Form, wobei die im Kopfteil 36 des Blocks 35 ausgebildete Ausnehmung 42 als Paßsitz für den Einsatzkonus ausgebildet ist. Im Ausführungsbeispiel dient als Einsatzkonus ein Steilkegelstumpf, dessen den größeren Durchmesser aufweisende Stirnfläche 43 einen Teil der Decke 44 der Bearbeitungskammer 34 bildet und somit dem Explosionsdruck in der Bearbeitungskammer unmittelbar ausgesetzt ist. Dieser Druck presst den Kegelstumpf beim Entgratvorgang mit seiner Mantelfläche 45 gegen die Fläche des Paßsitzes 42, so daß eine großflächige Abdichtung des Einsatzes 40 gegenüber dem Kopfteil 36 des Blocks 35 erzielt wird. Zusätzlich kann im Bereich der Mantelfläche 45 noch ein Dichtring 46 aus elastischem, hitzebeständigem Material angeordnet sein, der in einer Ringnut 47 des Paßsitzes 42 untergebracht ist.

Das der Bearbeitungskammer 34 abgewandte Ende des kegelförmigen Einsatzes 40 hat einen zylindrischen Fortsatz 48, der in eine Bohrung 49 des Kopfteils 36 hineinragt. An die Bohrung 49 schließt sich eine Bohrung 50 mit größerem Durchmesser an, die zur Aufnahme einer Stützscheibe 51 und des Kopfes 52 eines Gewindebolzens 53 dient. Dieser Gewindebolzen, welcher ein Loch der Stützscheibe durchgreift, steht mit einem Innengewinde 54 in Eingriff, das in dem Fortsatz 48 des Einsatzes 40 ausgebildet ist. Der Gewindebolzen 53 gestattet ein bedarfsweises Nachstellen des Einsatzes 40, derart, daß dessen Mantelfläche 45 stets mit einem bestimmten Druck an der Mantelfläche der Ausnehmung 42 anliegt.

Der Einsatz 40 besteht vorzugsweise aus einem hitzebeständigen Stahl, beispielsweise aus X10 Cr A17 (zunderbeständig bis 800 °C) oder X 15 Cr NiSi2520 (zunderbeständig bis 1 200 °C). Bei einem Verschleiß der Mantelfläche des Einsatzes 40 kann diese mehrmals nachgearbeitet werden. Um der damit verbundenen Durchmesser-Reduzierung des Einsatzes Rechnung zu tragen, hat der Einsatz im Neuzustand einen kleinen Überstand « a » gegenüber der Decke 44 der Bearbeitungskammer 34. Nach ein- oder zweimaliger Nachbearbeitung verschwindet dieser Überstand und die Stirnfläche 43 des Einsatzes liegt dann in Höhe der Deckenfläche 44 der Bearbeitungskammer 34.

Der mit der Gaszuführbohrung 39 versehene Einsatz 41 hat zylindrische Form und ist in einer Bohrung 55 des Kopfteils 36 untergebracht. An die Bohrung 55 schließt sich eine im Einsatz 40 ausgebildete Bohrung 56 mit etwas größerem Durchmesser an, die das Endstück des Einsatzes 41 aufnimmt. Die Stirnfläche dieses Endstückes stützt sich gegen einen Dichtring 57, der in einer Ringnut 58 des Einsatzes 40 untergebracht ist. Das der Mischkammer 37 zugekehrte Ende des Einsatzes 41 ist von einem weiteren Dichtring 59 umgeben, welcher in einer Ringnut 60 des Kopfteils 36 sitzt.

Bei der Montage werden zunächst die Dichtringe 46, 57 in die Ringnut 47 bzw. 58 eingebracht. Anschließend wird der Einsatz 40 in die Ausnehmung 42 gesteckt und mit dem Gewindebolzen 53 festgezogen. Sodann wird der Einsatz 41 in die Bohrung 55 eingeschoben, der Dichtring 59 in die Ringnut 60 eingesetzt und die Mischkammer 37 an den die Bearbeitungskammer 34 enthaltenden Block 35 angeflanscht. Vor Inbetriebnahme setzt man die Bearbeitungskammer unter einen definierten Druck und zieht gegenfalls den Gewindebolzen 53 nach.

Um ein lagerichtiges Einsetzen des Einsatzes 40 bezüglich der Bohrung 56 und der Dichtstelle 57, 58 sicherzustellen ist im Kopfteil 36 eine in die Bohrung 49 hineinragende Paßfeder 61 verankert, für die im Fortsatz 48 eine Nut 62 vorgesehen ist.

Der Einsatz 40 braucht nicht zwingend als Kegelstumpf ausgebildet zu werden, sondern kann auch jede andere konische Form, beispielsweise mit stufiger oder konkav bzw. konvex geformter Mantelfläche aufweisen. Wesentlich ist, daß der Durchmesser des Einsatzes in Richtung des Explosionsdrucks in der Bearbeitungskammer abnimmt, d. h., daß die den größten Durchmesser aufweisende Stirnfläche des Einsatzes der Bearbeitungskammer zugekehrt ist.

## Patentansprüche

1. Anlage zur Behandlung von Werkstücken (11) mit einem explosiven Gasgemisch, insbesondere thermische Entgratanlage, mit einer mittels eines Schließtellers (14) verschließbaren Bearbeitungskammer (10, 34) zur Aufnahme des Werkstückes (11), wobei an die Bearbeitungskammer (10, 34) gegebenenfalls ein Mischblock (26) zur Vermischung und Zündung des Brenngas-Sauerstoff-Gemisches über einen den Kopfteil (13) der Bearbeitungskammer (10, 34) durchquerenden und vorzugsweise vertikal in die Kammer (10, 34) mündenden Zuführkanal (31, 38) angeschlossen ist, der ganz oder teilweise in austauschbaren Einsätzen (40) aus hitzebeständigem Material verläuft, die in Ausnehmungen (42) des Kopfteils gehalten sind, dadurch gekennzeichnet, daß mindestens der dem Explosionsdruck in der Bearbeitungskammer (34) unmittelbar ausgesetzte Einsatz (40) für den in die Kammer mündenden Teil des Zuführkanals (38) eine konische Form mit in Richtung des Explosionsdrucks abnehmenden Durchmesser hat, und daß die im Kopfteil (36) der Bearbeitungskammer (34) vorgesehene Ausnehmung (42) als Paßsitz für den konischen Einsatz ausgebildet ist.

2. Anlage nach Anspruch 1, dadurch gekennzeichnet, daß der konische Einsatz (40) als Kegelstumpf, vorzugsweise als Steilkegelstumpf, ausgebildet ist.

3. Anlage nach Anspruch 1 oder 2, dadurch gekennzeichnet, daß der konische Einsatz (40) nachstellbar in seinem Paßsitz (42) angeordnet ist.

4. Anlage nach Anspruch 3, dadurch gekennzeichnet, daß zum Nachstellen des konischen Einsatzes (40) ein eine Bohrung (49) im Kopfteil (36) der Bearbeitungskammer (34) durchgreifender Gewindebolzen (53) dient, der in ein Innengewinde (54) eingreift, daß in dem der Bearbeitungskammer abgewandten Ende (48) des konischen Einsatzes ausgebildet ist.

5. Anlage nach einem der vorhergehenden Ansprüche, dadurch gekennzeichnet, daß die der Bearbeitungskammer (34) zugekehrte Stirnfläche (43) des konischen Einsatzes (40) einen Überstand (a) gegenüber der dem Paßsitz (42) für den Einsatz aufweisenden Wandfläche (44) der Bearbeitungskammer hat.

6. Anlage nach einem der vorhergehenden Ansprüche, dadurch gekennzeichnet, daß der in dem konischen Einsatz (40) befindliche Zuführkanal aus zwei sich kreuzenden Sacklochbohrungen (38, 39) besteht.

7. Anlage nach Anspruch 6, dadurch gekennzeichnet, daß sich an die durch die Mantelfläche des konischen Einsatzes (40) austretende Sacklochbohrung (39a) eine weitere Bohrung (39) anschließt, die in einem in die Mischkammer (37) führenden Einsatz (41) ausgebildet ist.

8. Anlage nach Anspruch 7, dadurch gekennzeichnet, daß die dem konischen Einsatz (40) zugekehrte Stirnfläche des vorzugsweise zylindrischen Form aufweisenden weiteren Einsatzes (41) an einem Dichtring (57) anliegt, der in einer die Sacklochbohrung (39) umgebenden Ringnut (58) des konischen Einsatzes (40) sitzt.

9. Anlage nach einem der vorhergehenden Ansprüche, dadurch gekennzeichnet, daß der Paßsitz (42) für den konischen Einsatz mit einer Ringnut (47) zur Aufnahme eines an der Mantelfläche des konischen Einsatzes anliegenden Dichtrings (46) versehen ist.

## Claims

1. Installation for handling workpieces (11) with an explosive gas mixture, in particular a thermal deburring installation, having a treatment chamber (10, 34) which can be closed by a closure plate (14) and is intended for accommodating the workpiece (11), with if necessary a mixing block (26) for mixing and igniting the mixture of fuel gas and oxygen being connected to the treatment chamber (10, 34) *via* a supply channel (31, 38) which crosses the head part (13) of the treatment chamber (10, 34), preferably opens out vertically into the chamber (10, 34) and runs entirely or partly in interchangeable inserts (40) of heat-resistant material which are held in recesses (42) of the head part, characterized in that at least the insert (40) directly exposed to the explosion pressure in the treatment chamber (34) and intended for the part of the feed channel (38) opening out into the chamber has a conical shape with a diameter decreasing in the direction of the explosion pressure, and that the recess (42) provided in the head part (36) of the treatment chamber (34) is made as a press fit for the conical insert.

2. Installation according to Claim 1, characterized in that the conical insert (40) is made as a truncated cone, preferably as a steep-angled truncated cone.

3. Installation according to Claim 1 or 2, characterized in that a conical insert (40) is adjustably arranged in a press fit.

4. Installation according to Claim 3, characterized in that a threaded bolt (53) which grips through a bore (49) in the head part (36) of the treatment chamber (34) is used for adjusting the conical insert (40), which threaded bolt (53) engages into an internal thread (54) which is made in the end (48) of the conical insert, which end (48) is remote from the treatment chamber.

5. Installation according to one of the preceding claims, characterized in that the end face (43) of the conical insert (40), which end piece (43) faces towards the treatment chamber (34), as a projecting length (a) relative to the wall surface (44) of the treatment chamber, which wall surface (44) has the press fit (42) for an insert.

6. Installation according to one of the preceding claims, characterized in that the supply channel located in the conical insert (40) consists of two intersecting blind bores (38, 39).

7. Installation according to Claim 6, characterized in that a further bore (39) adjoins the blind bore (39a) emerging through the circumference of the conical insert (40), which bore (39) is made in an insert (41) leading into the mixing chamber (37).

8. Installation according to Claim 7, characterized in that the end face of the further insert preferably having a cylindrical shape, which end face faces towards the conical insert (40), bears against a sealing ring (57) which sits in an annular groove (58) of the conical insert (40), which annular groove (58) surrounds the blind bore (39).

9. Installation according to one of the preceding claims, characterized in that the press fit (42) for the conical insert is provided with an annular groove (47) for accommodating a sealing ring (46) bearing against the circumference of the conical insert.

## Revendications

1. Installation de traitement de pièces (11) à l'aide d'un mélange gazeux explosif notamment installation d'ébarbage thermique comportant une chambre de traitement (10, 34) susceptible d'être fermée par un plateau de fermeture (14), pour recevoir la pièce (11), un bloc-mélangeur (26) étant le cas échéant relié à la chambre de traitement (10, 34) pour mélanger et allumer le mélange gaz combustible/oxygène par un canal d'alimentation (31, 38) traversant la tête (13) de la chambre de traitement (10, 34) et débouchant de préférence verticalement dans la chambre (10, 34), canal qui est en totalité ou en partie composé de garnitures (40) interchangeables en un matériau réfractaire, garnitures maintenues dans des cavités (42) de la tête, caractérisée en ce qu'au moins la garniture (40) directement exposée à la pression de l'explosion dans la chambre de traitement (34) présente pour la partie du canal d'alimentation (38) débouchant dans la chambre, une forme conique dont le diamètre diminue en direction de la pression de l'explosion, et en ce que la cavité (42) prévue dans la tête (36) de la chambre de traitement (34) est réalisée sous la forme d'un siège ajusté pour la garniture conique.

2. Installation selon la revendication 1, caractérisée en ce que la garniture conique (40) est un tronc de cône de préférence un tronc de cône à petit angle.

3. Installation selon les revendications 1 ou 2, caractérisée en ce que la garniture conique (40) est montée réglable dans son siège ajusté (42).

4. Installation selon la revendication 3, caractérisée en ce que pour régler la garniture conique (40), il est prévu une tige filetée (53) logée dans le perçage (49) de la tête (36) de la chambre de traitement (34), tige filetée qui comporte un filetage intérieur (54) réalisé dans l'extrémité (48) de la garniture conique, opposée à la chambre de traitement.

5. Installation selon l'une des revendications précédentes, caractérisée en ce que la surface frontale (43) de la garniture conique (40) tournée vers la chambre de traitement (34) comporte un débordement (a) par rapport à la surface de paroi (44) de la chambre de traitement munie du siège ajusté (42).

6. Installation selon l'une des revendications précédentes, caractérisée en ce que le canal d'alimentation prévu dans la garniture (40) se compose de deux trous borgnes (38, 39) qui se coupent.

7. Installation selon la revendication 6, caractérisée en ce que le trou borgne (39) qui débouche de la surface-enveloppe de la garniture conique (40) est suivi d'un autre perçage (39a) et forme une garniture (41) débouchant dans la chambre de mélange (37).

8. Installation selon la revendication 7, caractérisée en ce que la surface frontale tournée vers la garniture conique (40) de l'autre garniture (41) ayant de préférence une forme cylindrique s'applique contre une bague d'étanchéité (57) qui est logée dans une rainure annulaire (58) entourant le trou borgne (39) dans la garniture conique (40).

9. Installation selon l'une des revendications précédentes, caractérisée en ce que le siège ajusté (42) pour la garniture conique comporte une rainure annulaire (47) pour recevoir l'une des bagues d'étanchéité (46) s'appliquant contre la surface-enveloppe de la garniture conique.

FIG.1

0 131 800

FIG.2

0 131 800